# NEW EUROPEAN PATENT SPECIFICATION

(11) **EP 0 719 949 B2**
(45) Date of publication and mention of the opposition decision: **23.04.2003**
(45) Mention of the grant of the patent: 11.08.1999
(21) Application number: 95308429.0
(22) Date of filing: 23.11.1995
(51) Int. Cl.: F15B 13/00

(54) **Selector valve aggregate**
Einrichtung für Wegeventile
Dispositif pour vannes de commande

(30) Priority: 27.12.1994 JP 33812694
(43) Date of publication of application: 03.07.1996
(73) Proprietor: SMC CORPORATION, Minato-ku Tokyo 105 (JP)
(72) Inventor: Hayashi, Bunya, c/o SMC Corp. Tsukuba Techn. Ctr., Tsukuba-gun, Ibaraki (JP); Asou, Yoshio, c/o SMC Corp. Tsukuba Techn. Ctr., Tsukuba-gun, Ibaraki (JP); Ishikawa, Makoto, SMC Corp. Tsukuba Techn. Ctr., Tsukuba-gun, Ibaraki (JP)
(74) Representative: Allam, Peter Clerk

(56) References cited:
- EP-A- 0 628 729
- EP-A- 0 661 484
- EP-A3- 0 270 523
- DE-A- 3 530 019
- US-A- 3 464 444
- US-A- 3 605 805
- US-A- 4 215 721

## Description

### BACKGROUND OF THE INVENTION

The present invention relates to a selector valve aggregate, which comprises a plurality of selector valves integrally connected with each other.

A technique has been known in the art, in which a plurality of selector valves are used as a set of selector valve aggregate by connecting these selector valves with each other in order to collectively supply and discharge pressure fluid to these selector valves. For example, a plurality of selector valves are aligned and mounted on a manifold base having supply bores and discharge bores for the pressure fluid or a selector valve is installed on a sub-plate having supply bores and discharge bores and a given number of such sub-plates with the selector valves are joined together in lateral direction. Further, in case of a stacking type selector valve, which comprises a valve body with supply bores and discharge bores, a plurality of selector valves are directly joined and linked together without using the manifold base or the sub-plate as mentioned above.

However, in case a set of selector valve aggregates is formed by aligning the selector valves in lateral direction and by joining them together, the more selector valves there are, the longer the selector valve aggregate is in lateral dimension (in linking or connecting direction). If the space for installation is limited, this often leads to difficulty.

DE-A-3530019 discloses a selector valve aggregate which includes a plurality of parallel through bores, each including a slidable valve body which is slidable to control the communication between the ports of the valve. It is suggested that a number of these control valves may be mounted side-by-side on a supporting manifold.

US-A-3 464 444 discloses a selector valve aggregate according to the preamble of Claim 1.

It is an object of the present invention to provide a selector valve aggregate in compact size and with high integration, in which the length of the selector valve aggregate comprising a plurality of selector valves is reduced in connecting direction.

### SUMMARY OF THE INVENTION

To attain the above object, the present invention provides a selector valve aggregate according to the characterising portion of claim 1.

According to a concrete aspect of the present invention, the selector valve aggregate of the present invention comprises selector valve mechanisms incorporated in a composite type selector valve, each of the selector valve mechanisms comprises valve members for switching over the flow of the pressure fluid and a driving mechanism for driving said valve members, said valve members being arranged vertically in multiple stages within a valve body, and said driving mechanism being integrally assembled on said valve body; said valve body comprising joint surfaces for connection being formed on both sides thereof in lateral direction and a supply bore and discharge bores for the pressure fluid leading to each of the selector valve mechanisms, said bores being opened on the joint surfaces and communicated with bores of adjacent composite type selector valve; and output port separately communicated with each of the selector valve mechanisms being provided on a port block on a front end surface of the valve body.

According to another embodiment of the present invention, a common output port is provided for each of the selector valve mechanisms instead of providing an output port separately for each selector valve mechanism in said port block.

In the present invention, said driving mechanism may be designed as an electromagnetically operated pilot valve.

Because a plurality of selector valve mechanisms are incorporated vertically in multiple stages within a selector valve in each of the composite type selector valves, which constitute a selector valve aggregate, this is substantially the same as a plurality of selector valves connected within the width of a selector valve. Therefore, in case a plurality of composite type selector valves are connected together in lateral direction with joint surfaces in contact with each other, the length in connecting direction of the selector valve aggregate thus formed is extensively reduced compared with the case where as many selector valves as all the selector valve mechanisms are connected together in lateral direction. As a result, a highly integrated selector valve aggregate in compact size can be obtained.

### BRIEF DESCRIPTION OF THE DRAWINGS

Fig. 1 is a front view of a selector valve aggregate according to the present invention;
Fig. 2 is a plan view of the selector valve aggregate of Fig. 1:
Fig. 3 is a side view of the selector valve aggregate of Fig. 1;
Fig. 4 is a side view of a composite type selector valve;
Fig. 5 is a front view of the composite type selector valve of Fig. 4;
Fig. 6 is an enlarged cross-sectional view along the line A-A in Fig. 5; and
Fig. 7 is an enlarged view of an essential part of the selector valve of Fig. 6.

### DETAILED DESCRIPTION OF THE PREFERRED EMBODIMENTS

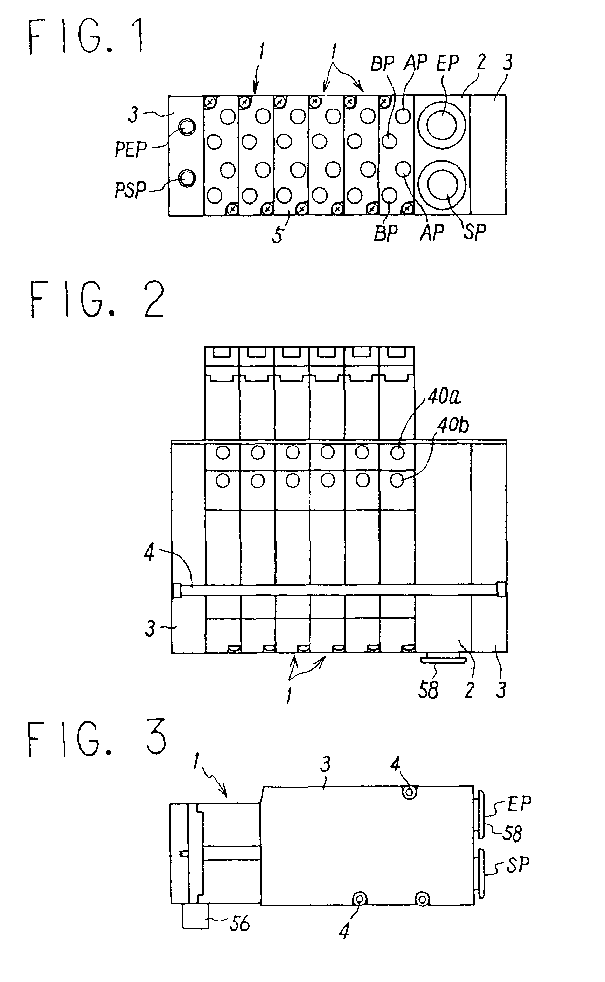

Fig. 1 to Fig. 3 each represents a selector valve aggregate, which is formed by collectively joining a plurality of composite type selector valves. This selector valve aggregate can be assembled by joining a plurality of composite selector valves, 1, 1,....., and a port block 2 for supply and discharge, and two side plates 3 and 3 positioned at left and right ends are joined together in lateral direction and are integrally fixed by upper and lower fastening means 4.

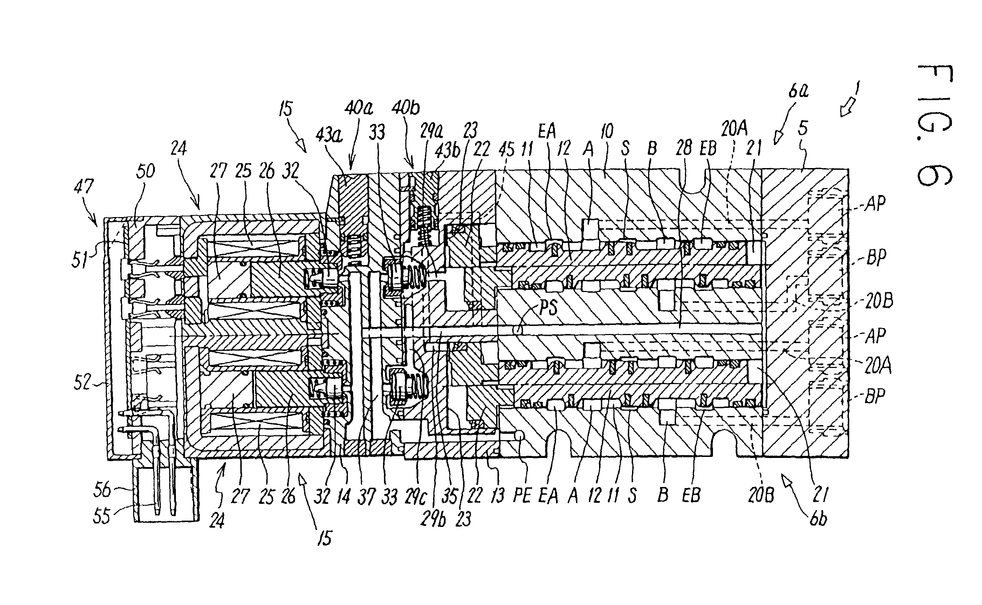

As shown in Fig. 4 to Fig. 7, in the composite selector valve 1 as described above, two sets of independently functioning selector valve mechanisms 6a and 6b used for switching over flow of pressure fluid such as compressed air are incorporated vertically in multiple stages in a selector valve. Concrete arrangement is as described below. In the figures, two sets of selector valve mechanisms are incorporated, while three sets or more may be incorporated.

Specifically, as it is evident from Fig. 4 to Fig. 7, the composite type selector valve 1 comprises a valve body 10 in shape of rectangular parallelopiped. Upper and lower valve bores 11 and 11 are formed inside the valve body 10, and spool type valve members 12 and 12 are slidably incorporated in these valve bores 11 of the selector valve mechanisms 6a and 6b. On one end surface in axial direction (rear end surface) of the valve bore of the valve body 10, a first and a second sub-bodies 13 and 14 are mounted, and two sets of driving mechanisms 15 and 15 for driving the above two valve members 12 and 12 are assembled on these sub-bodies 13 and 14.

Both sides in lateral direction of the valve body constitute joint surfaces 18 and 18 to be joined with the adjacent composite selector valve 1. On these joint surfaces 18 and 18, a supply bore S and discharge bores EA and EB used for pressure fluid and communicated with the valve bores 11 and 11 are formed. When a plurality of the composite selector valves 1 are joined together via a sealing member 19, the supply bore S and the discharge bores EA and E B of the composite selector valve 1 are communicated with those of the other composite selector valve 1. As shown in the figures, the supply bore S and the discharge bores EA and EB may be commonly communicated with the two valve bores 11 and 11 or they may be independently furnished for each valve bore.

On the joint surfaces 18 of one of the valve bodies 10, two sets of output bores A and B independently communicated with the valve bores 11 and 11 are formed. These output bores A and B are closed by the valve bodies 10 of the adjacent composite type selector valves 1 when the composite type selector valves 1 are joined together so that they are not communicated with output bores of the other selector valves. These output bores A and B are independently communicated with the output ports AP and BP opened on front surface of a port block 5 for output as mounted on a forward end surface of the valve body 10. These output ports AP and BP are provided as many as to correspond to the selector valve mechanisms 6a and 6b, and these are arranged above and below.

Each of the driving mechanisms 15 and 15 is provided as an electromagnetically operated pilot valve in the embodiment shown in the figures. Thus, each of the selector valve mechanisms 6a and 6b has the function as a single solenoid type selector valve as already known in the art.

Specifically, on one end in axial direction of each valve member 12, a return pressure chamber 21 for applying pilot fluid pressure on an end surface of the valve member 12 is provided. In contrast, on the other end of the valve member 12, a piston chamber 23 with a built-in piston 22 having a diameter larger than that of the valve member 12 is formed on a first sub-body 13. The return pressure chamber 21 is always communicated with a pilot supply bore PS passing through the valve body 10 via a flow passage 28. On the other hand, the piston chamber 23 is connected to the pilot supply bore PS via a pilot valve through a flow passage 29a (in case of the upper selector valve mechanism 6a) or flow passages 29b and 29c (in case of the lower selector valve mechanism 6b). The pilot supply bore PS is communicated with a pilot supply port PSP (Fig. 1) formed on the side plate 3.

Each of the driving mechanisms 15 and 15 comprises a solenoid mechanism 14 of known type for bringing a moving iron core 26 to or from a fixed iron core 27 by turning power on or off to a coil 25, a pilot supply valve seat 30 and a pilot discharge valve seat 31 provided back-to-back on a second sub-body 14, and a pilot supply valve disc 32 and a pilot discharge valve disc 33 for opening or closing the pilot supply valve seat 30 and the pilot discharge valve seat 31, and the pilot supply valve disc 32 is mounted on the movable iron core 26 of the solenoid mechanism 24.

The two sets of the solenoid mechanisms 24 and 24 are integrally molded.

When power is connected to the coil 25 and the moving iron core 26 is adsorbed on the fixed iron core 27, the pilot supply valve seat 30 is opened, and the pilot discharge valve seat 31 is closed. Then, the pilot fluid flows from the pilot supply bore PS into a pilot supply valve chest, to which the pilot supply valve seat 30 is opened, through a flow passage 35 and the pilot supply valve seat 30. Then, it passes through a flow passage (not shown) and flows into a pilot discharge valve chest, to which the pilot discharge valve seat 31 is opened. It passes through a flow passage 29a in the upper selector valve mechanism 6a, and through flow passage 29c and 29b in the lower selector valve mechanism 6b and flows into the piston chamber 23. As a result, the piston 22 is pushed rightward as shown in the lower half of the figure and moves the valve member 12 toward the right. Then, the supply bore S is communicated with the output bore A, and the discharge bore EB is communicated with the output bore B.

When the power to the coil 25 is turned off to return the moving iron core 26, the pilot supply valve seat 30 is closed, and the pilot discharge valve seat 31 is opened. Then, the pilot fluid in the piston chamber 23 passes through the pilot discharge valve seat 31 from the flow passages 29a or 29b and 29c into a flow passage 37, and it is discharged to outside from a pilot discharge port PEP on the side plate 3 via the pilot discharge bore PE, which passes through the valve body 10. Therefore, by the action of the pilot fluid pressure in the return pressure chamber 21, the valve member 12 and the piston 22 are pushed leftward as shown in the upper half of the figure. Thus, the supply bore S is communicated with the output bore B, and the discharge bore EA is communicated with the output bore A.

In the upper selector valve mechanism 6a, the piston chamber 23 is straightly communicated with the pilot valve through the flow passage 29a, while, in the lower selector valve mechanism 6b, the piston chamber 23 is communicated with the pilot valve via a manual operating mechanism 40b provided in the middle of the flow passages 29b and 29c, but the functions of the two selector valve mechanisms 6a and 6b are the same. The arrangement and the function of the manual operating mechanism 40b are as follows:

In the selector valve mechanisms 6a and 6b, manual operating mechanisms 40a and 40b are provided respectively in order that the valve members 12 can be switched over to manual operation when the solenoid mechanism 24 cannot be used due to the reason such as power suspension.

The manual operating mechanism 40a, which corresponds to the upper selector valve mechanism 6a, comprises an operating shaft 43a with its forward end tapered, and the operating shaft 43a is inserted into a bore of the second sub-body 14 so that it can be moved up and down, and it is pushed upward by a spring 44a. In this manual operating mechanism, when the operating shaft 43a is in non-operating condition, i.e. when it is pushed by the spring 44a and is at upper position, its forward end is separated from the moving iron core 26 of the solenoid mechanism 24. When the operating shaft 43a is pushed in against the force of the spring 44a, the side of its forward end is brought into contact with the moving iron core 26 and moves the moving iron core 26 toward the fixed iron core 27, and the pilot supply valve seat 30 is opened. This is substantially the same condition as the case where power is connected to the upper solenoid mechanism 24.

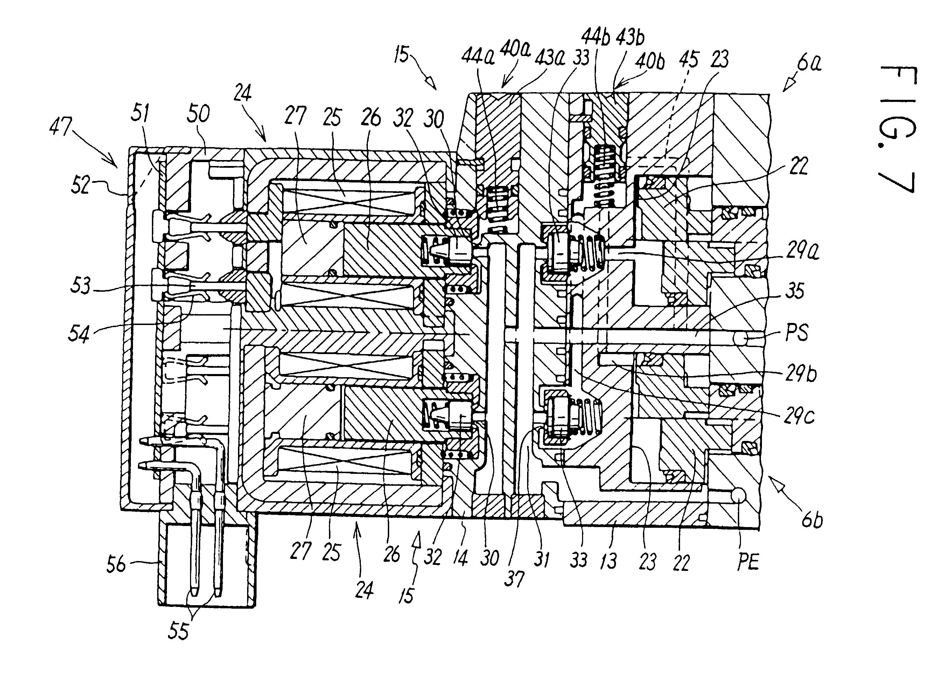

In the manual operating mechanism 40b which corresponds to the lower selector valve mechanism 6b, an operating shaft 43b is inserted into a bore, to which a flow passage 45 communicating with the pilot supply bore PS and the flow passages 29b and 29c connecting the piston chamber 23 with the pilot valve are opened, so that the operating shaft can be moved freely up and down, and it is pushed upward by a spring 44b. In this manual operating mechanism, when the operating shaft 43a is in non-operating condition, i.e. when it is pushed by the spring 44a and is at upper position, the flow passage 45 is blocked as shown in Figs. 6 and 7, and the flow passages 29b and 29c are communicated with each other. When the operating shaft 43b is pushed in against the force of the spring 44b, the flow passages 45 and 29b are communicated with each other. The pilot fluid is supplied into the piston chamber 23, and the flow passage 29c is blocked. This is substantially the same condition as in the case where power is connected to the lower solenoid mechanism 24.

The operating shafts 43a and 43b of the manual operating mechanisms 40a and 40b may be designed in such manner that they can be locked at operating positions.

On the pilot valve, a power feeding means 47 for feeding power to the solenoid mechanisms 24 and 24 is removably arranged. This power feeding means 47 comprises a terminal block 40 mounted on the solenoid mechanism 24 by adequate means such as bolt, a terminal strip 51 supported on the terminal block 50 and a terminal cover 52 to cover the terminal strip 51.

The terminal strip 51 with wiring printed on its surface comprises electrical parts such as indicator lamp, counter-electromotive force preventive device, etc. in addition to as many power feeding terminals 54 as power receiving terminals 53 protruded from each solenoid mechanism 24. On the lower end of the terminal strip 51, a terminal box 56 equipped with a plug terminal 55 for power connection is removably mounted by inserting the tip of the plug terminal into a hole of the terminal strip 51.

The terminal cover 52 to cover the terminal strip 51 has a plurality of engaging holes on its side, and by engaging pawls on outer side of the terminal block 50 into these engaging holes, the terminal cover is removably mounted on the terminal block 50.

In Fig. 1 to Fig. 3, joint surfaces are provided on two sides in lateral direction of the port block 2 for supply and discharge to connect to the composite type selector valve 1 and the side plate 3. On the joint surfaces, supply bores and discharge bores communicated with the supply bore S and the discharge bores EA and EB of the composite type selector valve 1 are formed, and a supply port SP communicated with the supply bore S and a discharge port EP communicated commonly with the discharge bores EA and EB are provided on the front surface of the port block 2 for supply and discharge. It is desirable that the supply port SP and the discharge port EP are provided with a single-acting tube fitting 58, which can be connected in fall-stop condition by simply inserting a tube.

Further, each of the side plates 3 and 3 at left and right ends of the selector valve aggregate has joint surface on inner side. By linking the joint surface with the composite type selector valve 1 or the port block 2 for supply and discharge, the supply bore S and the discharge bores EA and EB are closed.

In the embodiment shown in the figures, the pilot fluid can be supplied from outside by furnishing a pilot supply port PSP and a pilot discharge port PEP separately from the supply port SP and the discharge port EP for a main fluid, while it is also possible to use the ports in common by communicating the pilot supply bore PS and the pilot discharge bore PE with the supply port SP and the discharge port EP of the port block 2 for supply and discharge. In this case, it is needless to say that there is no need to provide the pilot supply port PSP and the pilot discharge port PEP

Thus, by connecting a given number of the composite type selector valves in lateral direction, the selector valve aggregate can be obtained. Because a plurality of selector valve mechanisms 6a and 6b are incorporated vertically in multiple stages within a selector valve in the composite type selector valve 1, it is substantially the same as a plurality of selector valves connected together within the width of a selector valve. Therefore, the length of the selector valve aggregate in connecting direction can be extensively reduced compared with the case where as many selector valves as all the selector valve mechanisms 6a and 6b are connected in lateral direction. For example, in case the selector valve mechanisms 6a and 6b are incorporated in two stages in the composite type selector valve 1, the length of the selector valve aggregate in connecting direction can be reduced to nearly one-half compared with the case where as many selector valves as all the selector valve mechanisms 6a and 6b are connected in lateral direction.

As a further embodiment of the present invention, as many output ports AP and BP as corresponding to a single selector valve mechanism may be provided instead of providing as many output ports AP and BP as corresponding to a plurality of selector valve mechanisms 6a and 6b in the output port block 5, and by communicating the output bores A or B of the selector valve mechanisms 6a and 6b with the output ports AP or BP and by simultaneously switching over the valve members 12 and 12, the fluid may be supplied at a flow rate corresponding to total number of the selector valve mechanisms 6a and 6b.

In the embodiments described above, the driving mechanism 15 for driving the valve member 12 is designed as an electromagnetically operated pilot valve, while operating system and overall arrangement are not limited to this type, and it may be another type of pilot valve using operating force other than electromagnetic force. Or, instead of the pilot valve, another type of driving mechanism may be used, in which the valve member can be directly switched over by electrical or mechanical operating force.

Although the selector valve mechanisms 6a and 6b are designed as 5-port valves, they may be designed in other types such as 3-port valves or 4-port valves.

Further, the selector valve aggregate as described above can be installed on adequate mounting members such as rail, manifold base, etc., and two sets or more of the selector valve aggregates may be arranged in line.

As described above, it is possible according to the present invention to extensively reduce the length of the selector valve aggregate in connecting direction and to design a highly integrated selector valve aggregate in compact size compared with the case where as many selector valves as all the selector valve mechanisms are connected in lateral direction because a composite type selector valve is arranged in which a plurality of selector valve mechanisms are incorporated vertically in multiple stages within a selector valve and a selector valve aggregate is obtained by connecting a given number of such composite type selector valves in lateral direction.

## Claims

1. A selector valve aggregate, comprising a given number of composite type selector valves (1) being connected in lateral direction, whereby each of said composite type selector valves (1) comprises a plurality of selector valve mechanisms (6a, 6b), said selector valve mechanisms (6a, 6b) being incorporated vertically in multiple stages, each of the selector valve mechanisms (6a, 6b) incorporated in the composite type selector valve (1) comprising a valve member (12) **characterised in that** each of the selector valve mechanisms (6a, 6b) incorporated in the composite type selector valve (1) comprises a valve member (12) for switching over the flow of the pressure fluid between two output bores (A, B) and **in that** each composite type selector valve (1) includes a plurality of driving mechanisms (15), one per valve member (12) for driving that valve member to switch over the flow of the pressure fluid between two output bores (A, B) separately and independently of the other valve members (12) of the composite type selector valve (1).

2. A selector valve aggregate according to claim 1, wherein:
for each of the composite type selector valves, said valve members (12) are arranged vertically in multiple stages within a valve body (10), and said driving mechanisms (15) are assembled on said valve body (10);
said valve body (10) comprising joint surfaces (18) for connection formed on both sides thereof in lateral direction and a supply bore (5) and discharge bores (EA, EB) for the pressure fluid leading to each of the selector valve mechanisms (6a, 6b), said bores (5, EA, EB) being opened on the joint surfaces (18) and communicated with bores (5, EA, EB) of adjacent composite type selector valve (1); and
an output port (AP, BP) separately communicated with each of the selector valve mechanisms (6a, 6b) being provided on a port block (5) on a front end surface of the valve body (10).

3. A selector valve aggregate according to claim 2, wherein a common output port is provided for a plurality of the selector valve mechanisms (6a, 6b) instead of providing an output port separately for each selector valve mechanism (6a, 6b) in said port block (5).

4. A selector valve aggregate according to any preceding claim, wherein said driving mechanisms (15) is an electromagnetically operated pilot valve.

## Patentansprüche

1. Wahlventilaggregat, das eine gegebene Anzahl von Verbundwahlventilen (1) aufweist, die in seitliche Richtung verbunden sind, wodurch jedes der Verbundwahlventile (1) mehrere Wahlventileinrichtungen (6a, 6b) aufweist, wobei die Wahlventileinrichtungen (6a, 6b) vertikal in mehreren Stufen eingebaut sind, wobei jede der Wahlventileinrichtungen (6a, 6b), die in das Verbundwahlventil (1) eingebaut sind, ein Ventilglied (12) aufweist, **dadurch gekennzeichnet, daß** jede der Wahlventileinrichtungen (6a, 6b), die in das Verbundwahlventil (1) eingebaut sind, ein Ventilglied (12) zum Umschalten des Flusses des Druckfluids zwischen zwei Ausgangsbohrungen (A, B) aufweist und daß jedes Verbundwahlventil (1) mehrere Antriebseinrichtungen (15), jeweils eine pro Ventilglied (12) zum Antreiben des Ventilglieds aufweist, um den Fluß des Druckfluids zwischen zwei Ausgangsbohrungen (A, B) getrennt und unabhängig von den anderen Ventilgliedern (12) des Verbundwahlventils (1) umzuschalten.

2. Wahlventilaggregat nach Anspruch 1, wobei:
für jedes der Wahlventile die Ventilglieder (12) vertikal in mehreren Stufen in einem Ventilkörper (10) angeordnet sind und die Antriebseinrichtungen (15) an dem Ventilkörper (10) montiert sind;
der Ventilkörper (10) Verbindungsoberflächen (18) zur Verbindung, die an dessen beiden Seiten in seitlicher Richtung ausgebildet sind, und eine Zufuhrbohrung (5) und Ablaßbohrungen (EA, EB) für das Druckfluid, die zu jeder der Wahlventileinrichtungen (6a, 6b) führen, aufweist, wobei die Bohrungen (5, EA, EB) an den Verbindungsoberflächen (18) geöffnet sind und mit Bohrungen (5, EA, EB) eines benachbarten Verbundwahlventils (1) verbunden sind; und
ein Ausgangsanschluß (AP, BP) separat mit jeder der Wahlventileinrichtungen (6a, 6b) verbunden ist, die an einem Anschlußblock (5) an einer vorderen Endoberfläche des Ventilkörpers vorgesehen sind.

3. Wahlventilaggregat nach Anspruch 2, wobei ein gemeinsamer Ausgangsanschluß für mehrere Wahlventileinrichtungen (6a, 6b) vorgesehen ist, anstatt einen Ausgangsanschluß separat für jede Wahlventileinrichtung (6a, 6b) im Anschlußblock (5) bereitzustellen.

4. Wahlventilaggregat nach einem der vorhergehenden Ansprüche, wobei die Antriebseinrichtung (15) ein elektromagnetisch betriebenes Vorsteuerventil ist.

## Revendications

1. Ensemble de valves de sélection, comprenant un nombre donné de valves de sélection de type composite (1) connectées suivant la direction transversale, dans lequel chacune des valves de sélection de type composite (1) comprend plusieurs mécanismes de valve de sélection (6a, 6b), les mécanismes de valves de sélection (6a, 6b) étant montés verticalement à plusieurs niveaux, chacun des mécanismes de valve de sélection (6a, 6b) qui fait partie intégrante de la valve de sélection de type composite (1) comprenant un obturateur de valve (12), **caractérisé en ce que** chacun des mécanismes de valves de sélection (6a, 6b) faisant partie intégrante de la valve de sélection de type composite (1) comprend un obturateur de valve (12) servant à assurer une commutation du flux de fluide sous pression entre deux passages de sortie (A, B) et **en ce que** chaque valve de sélection de type composite (1) comprend une pluralité de mécanismes d'entraînement (15), un mécanisme par obturateur de valve (12), servant à entraîner l'obturateur de valve (12) pour commuter le flux du fluide sous pression entre deux passages de sorties (A, B) de manière séparée et indépendante des autres obturateurs de valve (12) de la valve de sélection de type composite (1).

2. Ensemble de valves de sélection suivant la revendication 1, dans lequel, pour chacune des valves de sélection de type composite, lesdits obturateurs de valve (12) sont disposés verticalement suivant de multiples étages dans un corps de valve (10) et lesdits mécanismes d'entraînement (15) sont assemblés sur le corps de valve (10) de façon à former un seul bloc ;
le corps de valve (10) comportant des surfaces d'assemblage (18), servant à une connexion et formées sur ses deux faces suivant la direction transversale, et un passage d'alimentation (5) et des passages d'évacuation (EA, EB) prévus pour le fluide sous pression et menant à chacun des mécanismes de valve de sélection (6a, 6b), lesdits passages (5, EA, EB) débouchant sur les surfaces d'assemblage (18) et communiquant avec des passages(5, EA, EB) d'une valve de sélection de type composite (A) adjacente ; et
un orifice de raccordement de sortie (AB, BP), qui communique séparément avec chacun des mécanismes de valve de sélection (6a, 6b), étant prévu sur un bloc (5) d'orifices de raccordement sur une surface d'extrémité avant du corps de valve (10).

3. Ensemble de valves de sélection suivant la revendication 2, dans lequel un orifice de raccordement de sortie commun est prévu pour une pluralité de mécanismes de valve de sélection (6a, 6b) au lieu de prévoir un orifice de raccordement de sortie séparément pour chaque mécanisme de valve de sélection (6a, 6b) dans ledit bloc (5) d'orifices de raccordement.

4. Ensemble de valves de sélection suivant les revendications 2 ou 3, dans lequel le mécanisme d'entraînement (15) est une valve pilote à commande électromagnétique.
